# EUROPÄISCHE PATENTSCHRIFT

(11) **EP 2 305 521 B1**
(45) Veröffentlichungstag und Bekanntmachung des Hinweises auf die Patenterteilung: **02.11.2011**
(21) Anmeldenummer: 10173339.2
(22) Anmeldetag: 19.08.2010
(51) Int. Cl.: B60R 25/02

(54) **Fahrzeug-Lenkungsverriegelungsbaugruppe mit einer ein Verriegelungs-Freigabesignal empfangenden Sicherheitsschaltung**
Vehicle steering lock apparatus with a safety circuit which receives lock release signals
Ensemble de verrouillage de direction de véhicule doté d'un circuit de sécurité recevant un signal de libération de verrouillage

(30) Priorität: 30.09.2009 DE 102009045224
(43) Veröffentlichungstag der Anmeldung: 06.04.2011
(73) Patentinhaber: Huf Hülsbeck & Fürst GmbH & Co. KG, 42551 Velbert (DE)
(72) Erfinder: Finzel, Jörg, 40699, Erkrath (DE); Gornik, Christian, 45549, Sprockhövel (DE)
(74) Vertreter: Zenz

(56) Entgegenhaltungen:
- EP-A1- 1 359 068

## Beschreibung

Die Erfindung bezieht sich auf eine Fahrzeug-Lenkungsverriegelungsbaugruppe zur Kopplung mit einem Nachrichten zum Anweisen einer Verriegelung oder Entriegelung der Lenkung übermittelnden Bus und einem Freigabesignal eines Steuergeräts, das im Falle eine Stillstands des Fahrzeugs ein Rechtecksignal mit einer vorgegebenen Frequenz und einem vorgegebenen Tastgrad ist, wobei die Lenkungsverriegelungsbaugruppe einen einen Antriebsmotor für einen Sperrbolzen mit einer Versorgungsspannung koppelnden Leistungsschalter, einen mit dem Bus gekoppelten Controller, der bei Empfang einer Nachricht zum Anweisen einer Verriegelung ein erstes Steuersignal zum Einschalten des Leistungsschalters ausgibt, eine Sicherheitsschaltung, deren Eingang mit dem Freigabesignal des Steuergeräts gekoppelt ist und die ein zweites Steuersignal ausgibt, und eine Logikschaltung, die das erste Steuersignal mit dem zweiten Steuersignal verknüpft und ein den Leistungsschalter einschaltendes Ansteuersignal an einen Steueranschluss des Leistungsschalters nur dann anlegt, wenn sowohl das erste als auch das zweite Steuersignal anliegen, aufweist.

Üblicherweise enthält eine Lenkungsverriegelungsbaugruppe eines Kraftfahrzeugs einen Sperrbolzen, der zum Verriegeln der Lenkung in eine entsprechende Nut einer Lenksäule eingreift, sowie einen Antriebsmotor für den Sperrbolzen und ein den Antriebsmotor mit dem Sperrbolzen verbindendes Getriebe. Darüber hinaus enthält eine Fahrzeug-Lenkungsverriegelungsbaugruppe eine Ansteuerschaltung für den Antriebsmotor, welche Leistungsschalter enthält, die die beiden Anschlüsse des Antriebsmotors mit Masse und mit einer Versorgungsspannung koppeln. Bei einer Lenkungsverriegelungsbaugruppe, bei der das Drehen des Motors in einer Richtung zum Bewegen des Sperrbolzens in die Entriegelungsrichtung und das Drehen des Motors in der entgegengesetzten Richtung zu einer Bewegung des Sperrbolzens in die Verriegelungrichtung führt, ist der Antriebsmotor beispielsweise derart in eine vier Leistungsschalter aufweisende H-Brückenschaltung eingekoppelt, dass jeder Motoranschluss sowohl mit einem Leistungsschalter gekoppelt ist, der den Motoranschluss mit Masse verbindet, als auch mit einem Leistungsschalter gekoppelt ist, der den Motoranschluss mit der Versorgungsspannung koppelt. Durch entsprechendes Einschalten von jeweils in der Brücke einander gegenüberliegend angeordneten Leistungsschaltern kann der Antriebsmotor sowohl in der einen als auch in der entgegengesetzten Richtung angetrieben werden (siehe EP 1359068A).

Die Lenkungsverriegelungsbaugruppe weist üblicherweise einen Controller, das heißt eine Steuereinrichtung, beispielsweise in Form eines Mikrocontrollers, auf, der mit einem Bus des Fahrzeugs (CAN-Bus) gekoppelt wird. Über diesen Bus werden Nachrichten kommuniziert, beispielsweise Nachrichten, die die Lenkungsverriegelungsbaugruppe anweisen, eine Verriegelung oder Entriegelung der Lenkung auszuführen.

Bei einer elektronischen Lenkungsverriegelung (ELV) muss sichergestellt werden, dass die Lenkungsverriegelung in der entriegelten Position verbleibt, sobald sich das Fahrzeug bewegt. Ein versehentliches Ansteuern des Antriebsmotors derart, dass dieser den Sperrbolzen in die Verriegelungsposition bewegt, würde möglicherweise zu einer Manövrierunfähigkeit des bewegten Fahrzeugs führen und ist deshalb unbedingt zu verhindern. Aus diesem Grunde ist es bei bekannten Lenkungsverriegelungen vorgesehen, dass die Lenkungsverriegelungsbaugruppe ein Signal erhält, welches den Stillstand des Fahrzeugs anzeigt. Dieses Signal wird üblicherweise von einem Steuergerät des Kraftfahrzeugs erzeugt und über eine Signalleitung der Lenkungsverriegelungsbaugruppe zugeführt. Beispielsweise kann hier ein Signal verwendet werden, welches im Falle des Fahrzeugstillstands einen niedrigen Signalpegel (zum Beispiel Massepegel), einen hohen Signalpegel (zum Beispiel den der Versorgungsspannung) oder einen definierten Signalpegel, der zwischen Masse und Versorgungsspannung liegt, aufweist. Eine Übertragung eines solchen Signals zwischen dem Steuergerät und der Lenkungsverriegelungsbaugruppe birgt jedoch die Gefahr, dass sich die übertragende Signalleitung bzw. der Anschluss auf der Seite der Lenkungsverriegelungsbaugruppe fälschlicherweise auf dem Pegel befinden, der den Stillstand des Fahrzeugs anzeigt, obwohl sich das Fahrzeug bewegt. Dies kann beispielsweise durch Abreißen der Signalleitung oder durch fehlerhafte Kurzschlüsse zwischen der Signalleitung und Versorgungsleitungen bewirkt werden.

Um diese Gefahr des fehlerhaften Anlegens eines den Stillstand anzeigenden Signals an die Lenkungsverriegelungsbaugruppe zu verringen, wurde vorgeschlagen, den Stillstand des Fahrzeugs durch ein Signal anzuzeigen, welches mit einer Frequenz von 100Hz zwischen dem niedrigen Signalpegel und dem hohen Signalpegel umschaltet, also ein 100Hz-Rechtecksignal. Die das Signal empfangende Lenkungsverriegelungsbaugruppe enthält dann eine mit dem Signalanschluss gekoppelte Sicherheitsschaltung, welche das angelegte Signal dahingehend überprüft, ob dieses eine Frequenz von 100Hz aufweist, das heißt symmetrisch nach jeweils 5ms von dem einen Pegel auf den anderen umschaltet. Diese Sicherheitsschaltung liefert dann ein Steuersignal, welches einen hohen Pegel aufweist, solange das 100Hz-Freigabesignal anliegt. Um ein versehentliches Ansteuern des Motors in der Verriegelungsrichtung zu vermeiden, wird dann dasjenige Steuersignal des Controllers, das den Leistungsschalter ansteuert, der in der Verriegelungsrichtung den Motoranschluss mit der Versorgungsspannung verbindet, nicht direkt vom Controller dem Steueranschluss des Leistungsschalters zugeführt, sondern zuvor mit Hilfe eines UND-Gatters mit dem Steuersignal der Sicherheitsschaltung UND- verknüpft, so dass das Ansteuersignal an den Leistungsschalter nur dann angelegt wird, wenn sowohl der Controller das die Ansteuerung befehlende Steuersignal ausgibt als auch die Sicherheitsschaltung das zweite Steuersignal, welches den Stillstand des Fahrzeugs anzeigt, ausgibt.

Die Sicherheitsschaltung muss ein Einschalten des Leistungsschalters auch dann verhindern, wenn der Controller ausfällt und fehlerhaft das Ansteuersignal ausgibt. Deshalb muss die Sicherheitsschaltung auch baulich von dem Controller getrennt sein. Es wird gefordert, dass die Lenkungsverriegelungsbaugruppe den die Verriegelungsdrehrichtung bewirkenden und den Motoranschluss mit der Versorgungsspannung verbindenden Leistungsschalter nur dann einschaltet, wenn die erfasste Frequenz des Freigabesignals nicht mehr als 10% von der vorgegebenen Frequenz von 100Hz abweicht. Eine Sicherheitsschaltung, die eine Frequenz im Bereich von 100Hz erfasst, könnte beispielsweise einen passiven Bandpass aufweisen. Ein solcher passiver Bandpass hätte bei einer Frequenz von 100Hz und der geforderten Bandbreite eine nicht akzeptable Baugröße. Deshalb wurde vorgeschlagen, dass die Sicherheitsschaltung einen aktiven Bandpass zum Erfassen der 100Hz aufweist. Jedoch ist eine solche Sicherheitsschaltung relativ teuer.

Aufgabe der Erfindung ist es, eine Fahrzeug-Lenkungsverriegelungsbaugruppe der eingangs genannten Art zu schaffen, die einerseits in der Lage ist, das 100Hz-Freigabesignal mit den geforderten Toleranzen zu erfassen, und dabei die erforderliche Sicherheit auch im Falle eines Ausfalls des Controllers zur Verfügung stellt und die andererseits preiswert herstellbar ist.

Diese Aufgabe wird erfindungsgemäß durch eine Fahrzeug-Lenkungsverriegelungsbaugruppe mit den Merkmalen des Anspruchs 1 gelöst. Erfindungsgemäß ist die Lenkungsverriegelungsbaugruppe der eingangs genannten Art **dadurch gekennzeichnet, dass** ein zusätzlicher Eingabeport des Controllers mit dem Freigabesignal des Steuergeräts gekoppelt und der Controller so konfiguriert ist, dass er das Freigabesignal analysiert und das erste Steuersignal bei Empfang einer Nachricht zum Anweisen einer Verriegelung nur dann anlegt, wenn das Freigabesignal ein Rechtecksignal mit der vorgegebenen Frequenz und dem vorgegebenen Tastgrad ist, und dass die Sicherheitsschaltung eine einfache Wechselsignalerkennungsschaltung ist, die das zweite Steuersignal anlegt, wenn an ihrem Eingang ein Wechselsignal anliegt. Der Erfindung liegt einerseits der Gedanke zugrunde, die Sicherheitsschaltung dadurch preiswert zu gestalten, dass diese lediglich eine Wechselsignalerkennung, nicht aber eine Frequenzbestimmung vornimmt, was im Falle eines Ausfalls des Controllers eine ausreichende Sicherheit bietet, da es nur eine verschwindend geringe Wahrscheinlichkeit dafür gibt, dass ein fehlerhaft auf der Freigabesignalleitung anliegendes Signal ein Wechselsignal mit einer von 100Hz abweichenden Frequenz ist. Andererseits liegt der Erfindung der Gedanke zugrunde, dass der Controller mit Hilfe einer entsprechenden Programmierung relativ preiswert die Analyse des Freigabesignals hinsichtlich der Frequenz und des vorgegebenen Tastgrads liefern kann. Die zusätzlichen Funktionen des Controllers und die Bereitstellung des zusätzlichen Eingabeports führen zu keiner oder einer allenfalls sehr geringen Erhöhung der Herstellungskosten.

Die Erfindung ist grundsätzlich auf beliebige Ansteuerschaltungen für Antriebsmotoren anwendbar, bei denen das Einschalten eines oder mehrerer Leistungsschalter zu verhindern ist, die zu einem Einschalten des Motors derart führen können, dass der Sperrbolzen in die Verriegelungsrichtung bewegt werden kann. Dies könnten beispielsweise auch Lenkungsverriegelungsbaugruppen sein, bei denen sich der Antriebsmotor stets in derselben Richtung bewegt und dabei der Sperrbolzen zwischen der Verriegelungsposition und der Entriegelungsposition hin und her bewegt wird. Die erfindungsgemäße Ausbildung der Lenkungsverriegelungsbaugruppe ist auch nicht darauf beschränkt, dass das zweite Steuersignal (der Sicherheitsschaltung) nur mit einem ersten Steuersignal zum Ansteuern eines Leistungsschalters durch die Logikschaltung verknüpft wird. Vielmehr kann die Logikschaltung auch so ausgebildet sein, dass sie das zweite Steuersignal der Sicherheitsschaltung jeweils mit mehreren Steuersignalen zur Ansteuerung mehrerer Leistungsschalter verknüpft.

Bei einer bevorzugten Ausführungsform jedoch bildet der Leistungsschalter einen Zweig einer H-Brückenschaltung, wobei das Einschalten des mit dem Ansteuersignal der Logikschaltung geschalteten Leistungsschalters Voraussetzung für ein Bewegen des Antriebsmotors in der Verriegelungsrichtung ist.

Bei einer bevorzugten Ausführungsform der erfindungsgemäßen Baugruppe ist die Sicherheitsschaltung so ausgebildet, dass sie das zweite Steuersignal dann anlegt, wenn an ihrem Eingang ein Wechselsignal anliegt, dessen Frequenz nicht mehr als etwa zwei bis drei Zehnerpotenzen von der vorgegebenen Frequenz des Rechtecksignals abweicht. Dieses relativ breite Intervall der Wechselsignalfrequenz, bei der noch das zweite Steuersignal erzeugt und ausgegeben wird, ermöglicht die Verwendung sehr preiswerter Schaltungsanordnungen. Selbstverständlich kann die Sicherheitsschaltung so ausgebildet sein, dass sie bei noch vertretbarem schaltungstechnischen Aufwand ein geringeres Frequenzintervall zulässt. Für den Fall, dass das Rechtecksignal eine Frequenz von 100Hz bei einem Tastgrad von 50% aufweist, ist eine bevorzugte Ausführungsform der Baugruppe **dadurch gekennzeichnet, dass** die Sicherheitsschaltung so ausgebildet ist, dass sie das zweite Steuersignal dann anlegt, wenn an ihrem Eingang ein Wechselsignal anlegt, dessen Frequenz zwischen etwa 2Hz und 100kHz liegt.

Bei einer bevorzugten Weiterbildung der Erfindung ist die Baugruppe **dadurch gekennzeichnet, dass** die Sicherheitsschaltung eine erste Schaltung zum Erfassen jeder ansteigenden Flanke und/oder eine zweite Schaltung zum Erfassen jeder abfallenden Flanke des angelegten Freigabesignals aufweist. Die erste Schaltung oder die zweite Schaltung oder beide Schaltungen (sofern vorhanden) erzeugen nach Erfassen einer Flanke für eine vorgegebene Zeitdauer ein Ausgabesignal, das heißt ein Signal auf einem vorgegebenen logischen Pegel, beispielsweise einen hohen Pegel. Das zweite Steuersignal wird dann von dem Ausgabesignal bzw. der Summe der beiden Ausgabesignale gebildet (die Summe kann beispielsweise durch eine logische ODER-Verknüpfung gebildet werden). Sofern die Baugruppe zur Kopplung mit einem Freigabesignal des Steuergeräts vorgesehen ist, das im Falle des Stillstands des Fahrzeugs ein Rechtecksignal mit einer Frequenz von 100Hz und einem Tastgrad von 50 % ist, legt die Sicherheitsschaltung vorzugsweise bei jeder ansteigenden Flanke und/oder bei jeder abfallenden Flanke des angelegten Wechselsignals das zweite Steuersignal für eine vorgegebene Zeitdauer zwischen etwa 20ms und 300ms an. Vorzugsweise weisen die erste und die zweite Schaltung der Sicherheitsschaltung jeweils eine die Zeitdauer bestimmende Kombination aus Kondensator- und Widerstandsbauelementen auf. Beispielsweise kann die erste Schaltung der Sicherheitsschaltung, die jede ansteigende Flanke erfasst und ein entsprechendes Ausgabesignal erzeugt, und/oder die zweite Schaltung der Sicherheitsschaltung, die jede abfallende Flanke erfasst und ein entsprechendes Ausgabesignal erzeugt (sofern vorhanden), durch eine Transistorstufe mit ein oder zwei bipolaren Transistoren in Emitterschaltung gebildet werden, wobei die an der Basis angelegte, den Transistor schaltende Spannung vom Lade- bzw. Entladezustand eines zugehörigen Kondensators abhängt. Derartige Schaltungen weisen die geforderte hohe Zuverlässigkeit auf und lassen sich mit geringen Kosten herstellen.

Bei einer bevorzugten Ausführungsform der Erfindung ist die Baugruppe **dadurch gekennzeichnet, dass** der zusätzliche Eingabeport des Controllers, der das Freigabesignal des Steuergeräts empfängt, mit dem Eingang eines Analog/Digital-Umsetzers des Controllers gekoppelt ist, wobei der von dem Analog/Digital-Umsetzer ausgegebene Ausgabewert zyklisch mit einer Frequenz abgefragt wird, die größer als das doppelte der vorgegebenen Frequenz des Rechtecksignals ist. Das zyklische Abfragen des Ausgabewerts erfolgt programmgesteuert innerhalb des Controllers. Der Analog/Digital-Umsetzer braucht nur eine relativ geringe Genauigkeit zu haben. Vorzugsweise ist der Controller so konfiguriert, dass jeder abgefragte Ausgabewert mit zumindest einem Schwellwert verglichen wird, um zu erfassen, ob das Rechtecksignal zum Zeitpunkt der Abfrage einen niedrigen oder einen hohen Pegel hatte. Bei einer Ausführungsform wird beispielsweise abgefragt, ob die erfasste Spannung des Freigabesignals unter einem Wert von 0,75V liegt, wobei dann, wenn dies der Fall ist, davon ausgegangen wird, dass sich das Freigabesignal auf einem niedrigen Pegel befindet. Bei gegenwärtig verfügbaren Controllern ist es unproblematisch, bei einem 100Hz-Signal mit einer Periodendauer von 10ms die Spannung mehrfach innerhalb der Periode abzufragen und somit auch den rechteckförmigen Verlauf zu analysieren.

Bei einer Weiterbildung der erfindungsgemäßen Baugruppe ist der zusätzliche Eingabeport des Controllers, der das Freigabesignal des Steuergerätes empfängt, zusätzlich mit einem flankengetriggerten Interrupt-Eingang des Controllers verbunden. Alternativ kann der zusätzliche Eingabeport des Controllers zusätzlich als flankengetriggerter Interrupt-Eingang des Controllers konfiguriert sein. Der Interrupt-Eingang erzeugt bei jeder ansteigenden und/oder bei jeder abfallenden Flanke des Freigabesignals ein Interrupt, wobei der Controller so konfiguriert ist, dass er die Zeitdauer zwischen jeweils zwei Interrupts zählt, um ein mit der Frequenz des Rechtecksignals korrespondierendes Maß zu gewinnen. Beispielsweise könnte der Interrupt-Eingang jedes Mal dann ein Interrupt auslösen, wenn eine ansteigende Flanke auftritt; es ist aber auch denkbar, dass bei beiden Flanken ein Interrupt ausgelöst wird. Die zwischen den Flanken vergehende Zeitdauer mit einem Sollwert von 5ms wird gezählt und programmgesteuert mit einem Referenzwert verglichen.

Bei einer bevorzugten Ausführungsform der erfindungsgemäßen Baugruppe ist die Logikschaltung ein UND-Gatter, dessen Ausgang mit dem Steueranschluss des Leistungsschalters verbunden ist, wobei das erste und das zweite Steuersignal an jeweils einem Eingang des UND-Gatters anliegen. Dies gestattet eine einfache und zuverlässige Verknüpfung der beiden Steuersignale. Alternativ könnte die Logikschaltung auch eine Torschaltung enthalten, die das erste Steuersignal des Mikrocontrollers nur bei Anliegen des zweiten Steuersignals durchlässt.

Bei einer bevorzugten Weiterbildung der erfindungsgemäßen Baugruppe ist das zweite Steuersignal zusätzlich mit einem weiteren Eingabeport des Controllers gekoppelt, wobei der Controller so konfiguriert ist, dass er das Anliegen des zweiten Steuersignals überwacht und eine Fehlermeldung erzeugt, wenn das Anliegen oder Nicht-Anliegen des zweiten Steuersignals nicht mit den aus der Analyse des Freigabesignals des Steuergerätes abgeleiteten Informationen konsistent ist. Beispielsweise wird eine Fehlermeldung dann erzeugt, wenn das zweite Steuersignal anliegt, obwohl der Controller festgestellt hat, dass die Frequenz des Freigabesignals von 100Hz oder der Tastgrad von 50% in unzulässiger Weise abweichen. Andererseits wird eine Fehlermeldung auch dann erzeugt, wenn der Controller zu der Auffassung gelangt, dass ein korrektes Freigabesignal an seinem Port anliegt, aber kein zweites Steuersignal anliegt. Auf diese Weise erfolgt eine wechselseitige Überwachung der Controllerfunktion und der Funktion der Sicherheitsschaltung.

Vorzugsweise ist das zweite Steuersignal rückwirkungsfrei mit dem weiteren Eingabeport des Controllers gekoppelt. Dies hat den Vorteil, dass das an die Logikschaltung angelegte zweite Steuersignal nicht durch Fehlfunktionen des Controllers beeinflusst wird. Bei einer anderen bevorzugten Ausführungsform der erfindungsgemäßen Baugruppe ist auch das Freigabesignal des Steuergeräts rückwirkungsfrei mit dem zusätzlichen Eingabeport des Controllers gekoppelt, so dass keine unerwünschte Beeinflussung des an die Sicherheitsschaltung angelegten Freigabesignals durch eine Fehlfunktion des Controllers auftritt.

Vorteilhafte und/oder bevorzugte Weiterbildungen der Erfindung sind in den Unteransprüchen gekennzeichnet.

Im Folgenden wird die Erfindung anhand einer in den Zeichnungen dargestellten Ausführungsform näher erläutert. In den Zeichnungen zeigen:
Figur 1 ein schematisches Blockschaltbild der erfindungsgemäßen Fahrzeug-Lenkungsverriegelungsbaugruppe, angekoppelt an einen CAN-Bus und ein Steuergerät, und
Figur 2 ein Ausführungsbeispiel der Sicherheitsschaltung der in Figur 1 gezeigten Lenkungsverriegelungsbaugruppe.

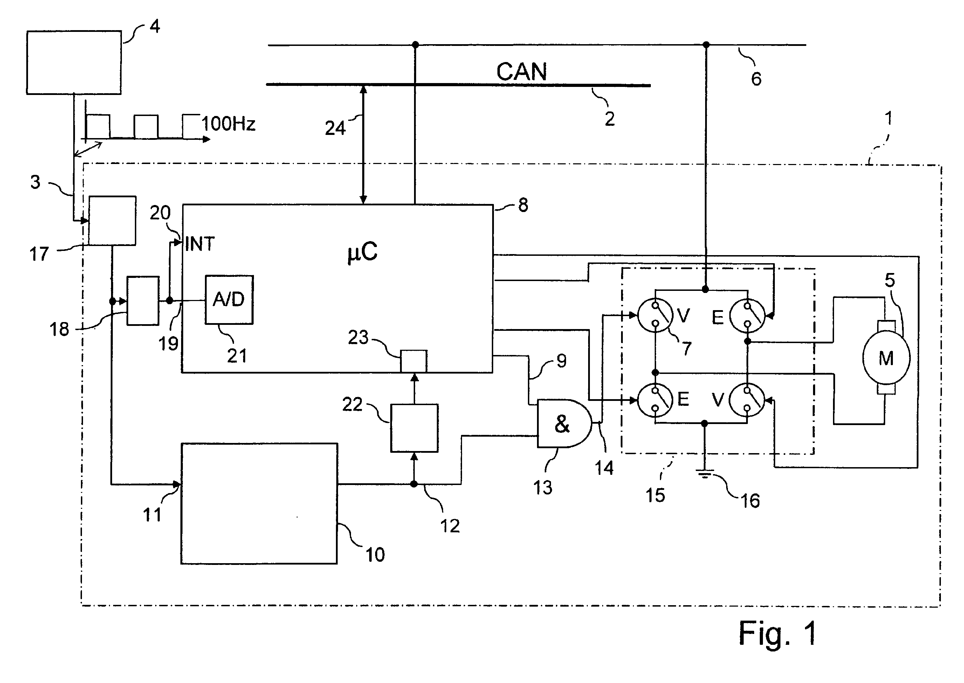

Figur 1 zeigt schematisch ein Ausführungsbeispiel einer erfindungsgemäßen Fahrzeug-Lenkungsverriegelungsbaugruppe 1 mit einer schaltungstechnisch vereinfachten Erkennung eines von einem Steuergerät 4 über Signalleitung 3 an die Lenkungsverriegelungsbaugruppe 1 angelegten Signals, welches im Falle des Stillstands des Fahrzeugs ein 100Hz-Rechtecksignal ist. Die Lenkungsverriegelungsbaugruppe 1 ist nicht nur mit dem Steuergerät 4 verbunden; sie empfängt darüber hinaus eine Reihe weiterer Signale von Steuerungseinrichtungen des Kraftfahrzeugs und ist mit der Spannungsversorgung des Fahrzeugs gekoppelt. Die Lenkungsverriegelungsbaugruppe 1 umfasst einen Antriebsmotor 5, der über ein (in Figur 1 nicht dargestelltes) Getriebe einen (ebenfalls nicht dargestellten) Sperrbolzen antreibt, wobei der Sperrbolzen zwischen einer Verriegelungsposition, in der er in eine Nut an der Lenksäule einrastet, und einer Entriegelungsposition, in der die Lenksäule freigegeben ist, hin und her bewegt werden kann. Bei der in Figur 1 dargestellten Ausführungsform bewegt der Antriebsmotor 5 in der einen Drehrichtung den Sperrbolzen aus der Entriegelungsposition in die Verriegelungsposition und in der entgegengesetzten Drehrichtung aus der Verriegelungsposition in die Entriegelungsposition. Es wird hier ein preiswerter Gleichstrommotor eingesetzt. Damit sich der Motor 5 in den beiden Richtungen (Entriegelungsrichtung und Verriegelungsrichtung) bewegen kann, ist der Antriebsmotor 5 über eine so genannte H-Brückenschaltung (in Figur 1 innerhalb des mit der Strich-Punkt-Linie 15 umrandeten Kastens dargestellt) mit der Versorgungsspannung 6 und mit Masse 16 gekoppelt. Die H-Brückenschaltung 15 weist vier Leistungsschalter, beispielsweise Leistungsschalttransistoren, Thyristoren oder Triacs auf. Sofern die mit dem Buchstaben E in Figur 1 gekennzeichneten Leistungsschalter eingeschaltet sind, sind die beiden Anschlüsse des Antriebsmotors 5 derart mit der Versorgungsspannung 6 und mit Masse 16 gekoppelt, dass sich der Antriebsmotor in der Entriegelungsrichtung bewegt. Sofern die beiden mit V gekennzeichneten Schalter eingeschaltet sind, ist die Polarität umgekehrt, so dass sich der Antriebsmotor 5 in der Verriegelungsrichtung bewegt. Die vier Steueranschlüsse der vier Leistungsschalter sind mit vier Steuerausgängen (Ausgabeports) eines Mikrocontrollers 8 verbunden. Der Mikrocontroller 8 enthält üblicherweise einen Mikroprozessor, einen Programmspeicher, einen Arbeitsspeicher und verschiedene Eingabe/- Ausgabe-Schnittstellen, die die vier für die Steuerleitungen benötigten Ausgabeports umfassen. Der Mikrocontroller ist darüber hinaus über eine Busschnittstelle, an welche die Leitung 24 angekoppelt ist, mit dem CAN-Bus 2 des Kraftfahrzeugs verbunden. Üblicherweise erhält der Mikrocontroller 8 von dem CAN-Bus Nachrichten (messages), die den Mikrocontroller 8 anweisen, die Lenkungsverriegelung entweder in die Entriegelungsposition oder in die Verriegelungsposition zu bewegen. Durch Abarbeitung der auf den Mikrocontroller ablaufenden Programme erzeugt der Mikrocontroller 8 in Abhängigkeit von den über Leitung 24 eingehenden Anweisungen die vier an die H-Brückenschaltung 15 auszugebenden Steuersignale.

Bei einer derartigen Fahrzeug-Lenkungsverriegelungsbaugruppe ist es unbedingt zu vermeiden, dass der Antriebsmotor 5 den Sperrbolzen in die Verriegelungsrichtung bewegt, sofern das Fahrzeug nicht stillsteht. Dies muss auch dann vermieden werden, wenn der Mikrocontroller 8 beispielsweise falsche Anweisungen über den CAN-Bus 2 erhält oder wenn der Mikrocontroller 8 selbst fehlerhaft arbeitet und über die vier Ansteuerleitungen Steuersignale ausgibt, die zum gleichzeitigen Schließen der mit V gekennzeichneten Leistungsschalter der H-Brückenschaltung 15 führen können. Insbesondere muss dann, wenn kein Stillstand des Fahrzeugs angezeigt wird, wenn sich das Fahrzeug also bewegt, verhindert werden, dass der Leistungsschalter 7, der den Motoranschluss des Antriebsmotors 5 mit der Spannungsversorgung 6 koppelt, eingeschaltet wird.

Zu diesem Zweck weist die Lenkungsverriegelungsbaugruppe 1 eine zusätzliche Sicherheitsschaltung 10 auf, deren Eingang 11 mit dem von dem Kraftfahrzeug-Steuergerät 4 ausgegebenen Freigabesignal 3 gekoppelt ist. Das Steuergerät 4 gibt als Freigabesignal 3 ein Rechtecksignal mit einer Frequenz von 100 Hz und einem Tastgrad von 50% aus, sofern das Fahrzeug stillsteht. Bei einer Lenkungsverriegelungsbaugruppe, die den Ausgangspunkt für die Erfindung bildete, wurde dieses 100Hz-Freigabesignal 3 lediglich der Sicherheitsschaltung 10 eingegeben, die nur dann an ihrem Ausgang ein Steuersignal 12 anlegte, wenn an ihrem Eingang 11 ein Signal mit einer Frequenz von 100Hz und einem Tastgrad von 50 % anliegt. Dieses das Anliegen des 100Hz-Freigabesignals anzeigende Steuersignal 12 wird mit dem Steuersignal 9 des Mikrocontrollers 8, welches das Einschalten des Leistungsschalters 7 bewirkt, durch das UND-Gatter 13 UND-verknüpft, so dass das Ansteuersignal 14 den Leistungsschalter 7 nur dann einschaltet, wenn sowohl das Steuersignal 9 des Mikrocontroller 8 als auch das Steuersignal der Sicherheitsschaltung 10 anliegt.

Die in Figur 1 dargestellte erfindungsgemäße Ausführungsform der Lenkungsverriegelungsbaugruppe 1 umfasst im Wesentlichen zwei Modifikationen gegenüber derjenigen Lenkungsverriegelungsbaugruppe, von der die Erfindung ausgeht. Beide Modifikationen führen dazu, dass eine Lenkungsverriegelungsbaugruppe 1 geschaffen wird, die mit geringem schaltungstechnischen Aufwand und somit auf kostengünstige Weise eine hohe Sicherheit der korrekten Erfassung des Freigabesignals 3 des Steuergeräts 4 bietet. Das Freigabesignal 3 des Steuergeräts 4, welches bei Stillstand des Fahrzeugs ein 100Hz-Rechtecksignal ist (vgl. die Darstellung des Signalverlaufs in Figur 1), wird zunächst an eine Eingangsschutzschaltung 17 der Lenkungsverriegelungsbaugruppe 1 angelegt, die zum Schutz der Lenkungsverriegelungsbaugruppe 1 gegenüber Überspannung und elektrostatischen Entladungen dient. Das Freigabesignal durchläuft diese Schutzschaltung 17 und wird dann einerseits an den Eingangsanschluss 11 der Sicherheitsschaltung 10 angelegt und andererseits über eine Schaltung 18 an Eingabeports 19 und 20 des Mikrocontrollers 8. Die Schaltung 18 dient dazu, eine Rückwirkung der auf den Eingabeports 19 und 20 anliegenden Spannungen auf das Freigabesignal, welches am Eingang 11 der Sicherheitsschaltung 10 anliegt, zu verhindern. Damit soll der ungestörte Empfang des Freigabesignals durch die Sicherheitsschaltung 10 auch dann gewährleistet werden, wenn der Mikrocontroller 8 infolge einer Fehlfunktion eine Spannung auf den Eingabeports 19 oder 20 ausgibt oder diese auf Masse schaltet.

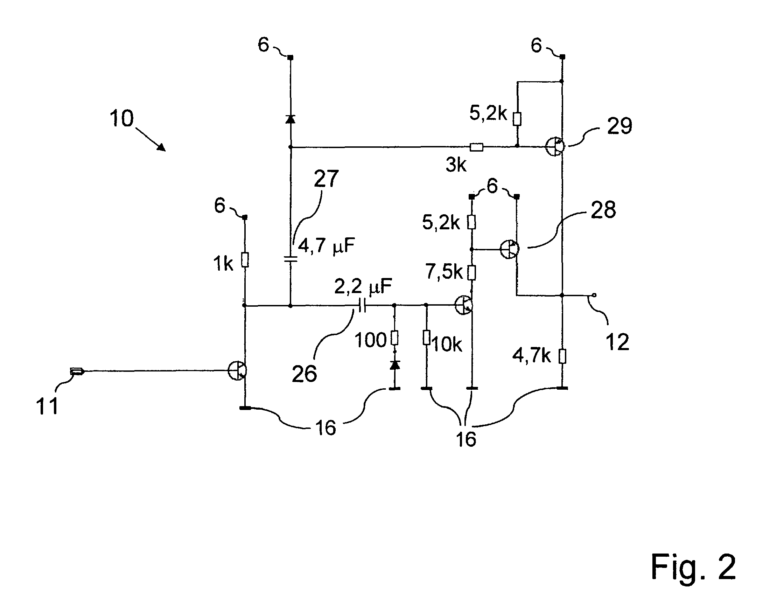

Die Sicherheitsschaltung 10 ist bei der erfindungsgemäßen Lenkungsverriegelungsbaugruppe 1 eine einfache Wechselsignalerkennungsschaltung, die mit einfachen schaltungstechnischen Mitteln dafür sorgt, dass das Steuersignal 12 an ihrem Ausgang auf einen hohen Pegel gelegt wird, sofern das an dem Eingang 11 anliegende Signal ein Wechselsignal ist, das heißt sofern das am Eingang anliegende Signal zwischen einem niedrigen und einem hohen Pegel mit einer Frequenz wechselt, die nicht mehr als etwa zwei bis drei Zehnerpotenzen von der Frequenz von 100Hz des Freigabesignals 3 abweicht. Eine solche Schaltung ist sehr preiswert herstellbar. Figur 2 zeigt ein Beispiel einer solchen Wechselsignalerkennungsschaltung, die auch als Flankenerkennungsschaltung bezeichnet wird. Die Schaltung wird unten näher erläutert.

Bei dem in Figur 1 dargestellten bevorzugten Ausführungsbeispiel wird das 100Hz-Rechteck-Freigabesignal sowohl an einen Port 19 des Mikrocontrollers 8 angelegt, der mit dem Eingang eines Analog/Digital-Umsetzers 21 gekoppelt ist, als auch an einen Interrupt-Port 20, der flankengetriggert ist. Der Mikrocontroller 8 ist so konfiguriert, dass er das Freigabesignal analysiert und das Steuersignal 9 zum Einschalten des Leistungsschalters 7 nur dann anlegt, wenn er einerseits eine Nachricht zum Anweisen einer Verriegelung von dem CAN-Bus 2 empfangen hat und wenn andererseits festgestellt wird, dass das an den Ports 19 und 20 anliegende Freigabesignal ein Rechtecksignal mit der vorgegebenen Frequenz von 100Hz und dem vorgegebenen Tastgrad von 50% ist. Die Analyse des Freigabesignals führt der Mikrocontroller 8 programmgesteuert wie folgt durch. Jedes Mal dann, wenn in dem Freigabesignal eine Flanke vom hohen zum niedrigen Spannungspegel und/oder vom niedrigen zum hohen Spannungspegel auftritt, wird ein Interrupt erzeugt, welches den Mikrocontroller 8 programmgesteuert veranlasst, einen Zähler abzufragen, welcher bei dem vorangegangenen Interrupt gestartet wurde und zugleich einen nächsten Zähler neu zu starten. Der Zählerwert hängt selbstverständlich von der Taktfrequenz des Mikrocontrollers ab, welche um ein Vielfaches höher als die Frequenz des Freigabesignals ist. Aufgrund des Zählerwerts kann der Mikrocontroller 8 feststellen, welche Zeitdauer zwischen den Flanken des Freigabesignals vergangen ist. Bei anliegendem 100Hz-Rechtecksignal (bei Stillstand des Fahrzeugs) muss der Mikrocontroller eine Zeitdauer von 5ms zwischen zwei benachbarten Flanken feststellen. Darüber hinaus tastet der Mikrocontroller über den Analog/- Digital-Umsetzer 21 den Augenblicksspannungswert des Freigabesignals ab. Bei dem bevorzugten Ausführungsbeispiel prüft der Mikrocontroller mehrfach während der Periodendauer des 100Hz-Signals, ob die erfasste Spannung unter einem Wert von 0,75V liegt. Sofern dies der Fall ist, geht der Mikrocontroller davon aus, dass sich das Freigabesignal auf einem niedrigen (low) Pegel befindet. Der Mikrocontroller stellt ferner fest, ob die Zeitdauer, in der sich die erfasste Spannung auf dem Low-Pegel befindet, der 5ms-Zeitdauer zwischen zwei Interrupts entspricht, wobei zwischen den beiden darauffolgenden Interrupts die Spannung nicht unter dem Wert von 0,75V liegen darf. Auf diese programmtechnisch und schaltungstechnisch relativ einfache Weise gestattet der Mikrocontroller 8 eine relativ genaue Analyse des anliegenden Freigabesignals. Diese relativ genaue, aber dennoch preiswerte Analyse des Freigabesignals mit Hilfe des Mikrocontrollers 8 verbunden mit einer ebenfalls schaltungstechnisch einfachen und preiswerten, aber relativ ungenauen Analyse des Freigabesignals durch die Sicherheitsschaltung 10 führt zu einer ausreichend hohen Sicherheit, da hiermit durch die Sicherheitsschaltung 10 ein vom Mikrocontroller 8 unabhängiger Kanal auf die Motorbrücke wirkt.

Zusätzlich ist es bei dem in Figur 1 dargestellten bevorzugten Ausführungsbeispiel der erfindungsgemäßen Lenkungsverriegelungsbaugruppe 1 vorgesehen, dass der Mikrocontroller die Funktion der Sicherheitsschaltung prüft. So ist das Ausgabesignal 12 der Sicherheitsschaltung 10 über eine Schaltungsanordnung 22 mit einem weiteren Eingabeport 23 des Mikrocontrollers 8 gekoppelt. Die Schaltung 22 dient wiederum dazu, eine Rückwirkung des Ausgabeports 23 auf die Signalleitung 12 zu verhindern. Sie vermeidet beispielsweise, dass eine am Ausgabeport 23 anliegende Spannung auf die Signalleitung 12 und somit an den Eingang des UND-Gatters 13 gelangt. Programmgesteuert überprüft der Mikrocontroller 8 die am Eingabeport 23 anliegende Spannung. Auf diese Weise kann der Mikrocontroller 8 feststellen, ob das Anliegen oder Nicht-Anliegen des Steuersignals 12 mit den aus der Analyse des Freigabesignals 3 des Steuergeräts 4 abgeleiteten Informationen konsistent ist. So wird beispielsweise dann eine Fehlermeldung ausgegeben, wenn das Steuersignal 12 nicht anliegt, obwohl der Mikrocontroller festgestellt hat, dass ein Freigabesignal 3 in Form eines 100Hz-Rechtecksignals anliegt. Dann muss nämlich entweder eine Fehlfunktion der Sicherheitsschaltung 10 oder eine Fehlfunktion des Mikrocontrollers oder eine Störung der Signalweiterleitung vorliegen. Umgekehrt erzeugt der Mikrocontroller auch dann eine Fehlermeldung, wenn zwar das Steuersignal 12 anliegt, der Mikrocontroller aber feststellt, dass kein 100Hz-Freigabesignal anliegt. Dies führt zu einer zusätzlichen Sicherheit.

Figur 2 zeigt ein Ausführungsbeispiel der schaltungstechnisch einfachen Sicherheitsschaltung 10, welche eine Wechselsignalerkennung bzw. eine Erkennung abwechselnder Flanken durchführt. An dem Eingang 11 wird das Freigabesignal angelegt. Der Eingang liegt am Basisanschluss eines Eingangstransistors, welcher im Falle eines hohen anliegenden Pegels eingeschaltet ist, so dass der Kollektor-Anschluss des Transistors bei einem hohen anliegenden Eingangssignal auf einen niedrigen Pegel gezogen wird. An dem Knoten des Kollektor-Anschlusses dieses Transistors sind zwei Kondensatoren 26, 27 angekoppelt, wobei an dem Kondensator 26 ein erster Schaltungsteil mit dem Ausgangstransistor 28 und an dem Kondensator 27 ein zweiter Schaltungsteil mit dem Ausgangstransistor 29 angekoppelt sind. Beide Ausgangstransistoren 28 und 29 koppeln den Ausgangsanschluss 12 der Schaltung mit der Spannungsversorgung 6, das heißt, das Steuersignal 12 der Sicherheitsschaltung 10 wird angelegt, wenn zumindest einer der Ausgangstransistoren 28 oder 29 eingeschaltet ist. Nur wenn beide Transistoren ausgeschaltet sind, zieht ein den Ausgangsknoten mit Masse koppelnder Widerstand (hier 4,7 kΩ) das Ausgangssignal auf Masse 16. Die beiden Kondensatoren 26 und 27 bestimmen zusammen mit den angekoppelten Widerstandsnetzwerken die Zeitdauer, in der die jeweils zugeordneten Ausgangstransistoren 28 bzw. 29 nach dem Auftreten einer ansteigenden bzw. abfallenden Flanke des Signals am Eingang 11 eingeschaltet bleiben. Ist beispielsweise aufgrund eines niedrigen Eingangssignals der Eingangstransistor ausgeschaltet, so ist zunächst der Eingangsanschluss des mit dem Eingangsanschluss des Transistors 28 gekoppelten Transistors auf einem hohen Pegel, was zum Einschalten des Ausgangstransistors 28 führt. Der Kondensator 26 wird jedoch dann langsam auf die Betriebsspannung aufgeladen, wobei die Spannung am Eingangsanschluss des angekoppelten Transistors langsam absinkt, was schließlich zum Ausschalten des Transistors und somit auch zum Ausschalten des Ausgangstransistors 28 führt. Befindet sich somit der Eingangsanschluss 11 längere Zeit auf niedrigem Pegel, wird kein Ausgangssignal 12 ausgegeben. Wenn andererseits der Pegel am Eingang 11 auf einen hohen Pegel springt, so wird der Eingangstransistor eingeschaltet und der Knoten, an dem die beiden Kondensatoren 26 und 27 angekoppelt sind, auf Masse 16 gezogen. Dabei wird zunächst der Eingangsanschluss des Transistors 29 ebenfalls auf Masse gezogen, was diesen Transistor 29 einschaltet. Anschließend wird jedoch langsam der Kondensator 27 aufgeladen, so dass die Spannung am Eingangsanschluss des Transistors 29 ansteigt, was schließlich zum Ausschalten des Transistors 29 führt. Wenn somit für eine längere Zeit ein hoher Pegel am Eingangsanschluss 11 anliegt, wird ebenfalls das Ausgangssignal 12 weggenommen. Nur ein ständiger Wechsel zwischen hohem Pegel und niedrigem Pegel am Eingang 11 führt zu einem dauerhaften Anliegen des Ausgangssignals 12.

Selbstverständlich sind eine Reihe alternativer Schaltungen für die Sicherheitsschaltung 10 denkbar. Vorzugsweise wird eine möglichst einfache und preiswerte, aber auch zuverlässige Auslegung der Sicherheitsschaltung 10 angestrebt. Das Frequenzintervall, in dem die Schaltung noch ein Ausgangssignal 12 erzeugt, ist dabei von untergeordneter Bedeutung. Selbstverständlich kann auch eine preiswerte und zuverlässige Schaltung eingesetzt werden, die einen engeren Toleranzbereich hinsichtlich der Eingangsfrequenz aufweist. In jedem Fall jedoch ist auch die Baugröße der Sicherheitsschaltung zu beachten. Bauelemente mit großen Volumina lassen sich in der Lenkungsverriegelungsbaugruppe nicht unterbringen.

## Patentansprüche

1. Fahrzeug-Lenkungsverriegelungsbaugruppe (1) zur Kopplung mit einem Nachrichten zum Anweisen einer Verriegelung oder Entriegelung der Lenkung übermittelnden Bus (2) und einem Freigabesignal (3) eines Steuergeräts (4), das im Falle eines Stillstands des Fahrzeugs ein Rechtecksignal mit einer vorgegebenen Frequenz und einem vorgegebenen Tastgrad ist, mit:
einem einen Antriebsmotor (5) für einen Sperrbolzen mit einer Versorgungsspannung (6) koppelnden Leistungsschalter (7),
einem mit dem Bus (2) gekoppelten Controller (8), der bei Empfang einer Nachricht zum Anweisen einer Verriegelung ein erstes Steuersignal (9) zum Einschalten des Leistungsschalters (7) ausgibt,
einer Sicherheitsschaltung (10), deren Eingang (11) mit dem Freigabesignal (3) des Steuergeräts (4) gekoppelt ist und die ein zweites Steuersignal (12) ausgibt, und
einer Logikschaltung (13), die das erste Steuersignal (9) mit dem zweiten Steuersignal (12) verknüpft und ein den Leistungsschalter (7) einschaltendes Ansteuersignal (14) an einen Steueranschluss des Leistungsschalters (7) nur dann anlegt, wenn sowohl das erste als auch das zweite Steuersignal (12) anliegen,
**dadurch gekennzeichnet,**
**dass** ein zusätzlicher Eingabeport (19, 29) des Controllers (8) mit dem Freigabesignal (3) des Steuergeräts (4) gekoppelt und der Controller (8) so konfiguriert ist, dass er das Freigabesignal (3) analysiert und das erste Steuersignal (9) bei Empfang einer Nachricht zum Anweisen einer Verriegelung nur dann anlegt, wenn das Freigabesignal (3) ein Rechtecksignal mit der vorgegebenen Frequenz und dem vorgegebenen Tastgrad ist, und
**dass** die Sicherheitsschaltung (10) eine einfache Wechselsignalerkennungsschaltung ist, die das zweite Steuersignal (12) anlegt, wenn an ihrem Eingang (11) ein Wechselsignal anliegt.

2. Baugruppe nach Anspruch 1, **dadurch gekennzeichnet, dass** der Leistungsschalter (7) einen Zweig einer H-Brückenschaltung bildet, wobei das Einschalten des mit dem Ansteuersignal (14) der Logikschaltung (13) geschalteten Leistungsschalters (7) Voraussetzung für ein Bewegen des Antriebsmotors (5) in der Verriegelungsrichtung ist.

3. Baugruppe nach Anspruch 1 oder 2, **dadurch gekennzeichnet, dass** die Sicherheitsschaltung (10) so ausgebildet ist, dass sie das zweite Steuersignal (12) dann anlegt, wenn an ihrem Eingang (11) ein Wechselsignal anliegt, dessen Frequenz nicht mehr als etwa zwei bis drei Zehnerpotenzen von der vorgegebenen Frequenz des Rechtecksignals abweicht.

4. Baugruppe nach Anspruch 3 zur Kopplung mit einem Freigabesignal (3) des Steuergeräts (4), das im Falle des Stillstands des Fahrzeugs ein Rechtecksignal mit einer Frequenz von 100 Hz und einem Tastgrad von 50% ist, **dadurch gekennzeichnet, dass** die Sicherheitsschaltung (10) so ausgebildet ist, dass sie das zweite Steuersignal (9) dann anlegt, wenn an ihrem Eingang (11) ein Wechselsignal anliegt, dessen Frequenz zwischen etwa 2 Hz und 100 kHz liegt.

5. Baugruppe nach einem der Ansprüche 1 - 3, **dadurch gekennzeichnet, dass** die Sicherheitsschaltung (10) eine erste Schaltung zum Erfassen jeder ansteigenden Flanke und/oder eine zweite Schaltung zum Erfassen jeder abfallenden Flanke des angelegten Freigabesignals (3) aufweist, wobei die erste und die zweite Schaltung nach Erfassen der Flanke für eine vorgegebene Zeitdauer ein Ausgabesignal erzeugen, wobei das zweite Steuersignal (12) von dem Ausgabesignal bzw. der Summe der beiden Ausgabesignale gebildet wird.

6. Baugruppe nach Anspruch 5 zur Kopplung mit einem Freigabesignal (3) des Steuergeräts (4), das im Falle des Stillstands des Fahrzeugs ein Rechtecksignal mit einer Frequenz von 100 Hz und einem Tastgrad von 50% ist, **dadurch gekennzeichnet, dass** die Sicherheitsschaltung (10) bei jeder ansteigenden Flanke und/oder bei jeder abfallenden Flanke des angelegten Wechselsignals das zweite Steuersignal (12) für eine vorgegebene Zeitdauer zwischen etwa 20 ms und 300 ms anlegt.

7. Baugruppe nach Anspruch 5 oder 6, **dadurch gekennzeichnet, dass** die erste und die zweite Schaltung der Sicherheitsschaltung (10) jeweils eine die Zeitdauer bestimmende Kombination aus Kondensator- und Widerstandsbauelementen aufweisen.

8. Baugruppe nach einem der Ansprüche 1 - 7, **dadurch gekennzeichnet, dass** der zusätzliche Eingabeport (19, 29) des Controllers (8), der das Freigabesignal (3) des Steuergeräts (4) empfängt, mit dem Eingang (11) eines Analog/Digital-Umsetzers des Controllers (8) gekoppelt ist, wobei der von dem Analog/Digital-Umsetzer ausgegebene Ausgabewert zyklisch mit einer Frequenz abgefragt wird, die größer als das Doppelte der vorgegebenen Frequenz des Rechtecksignals ist.

9. Baugruppe nach Anspruch 8, **dadurch gekennzeichnet, dass** der Controller (8) so konfiguriert ist, dass jeder abgefragte Ausgabewert mit zumindest einem Schwellwert verglichen wird, um zu erfassen, ob das Rechtecksignal zum Zeitpunkt der Abfrage einen niedrigen oder einen hohen Pegel hatte.

10. Baugruppe nach einem der Ansprüche 1 - 9, **dadurch gekennzeichnet, dass** der zusätzliche Eingabeport (19, 29) des Controllers (8), der das Freigabesignal (3) des Steuergeräts (4) empfängt, mit einem flankengetriggerten Interrupt-Eingang des Controllers (8) verbunden ist, der bei jeder ansteigenden und/oder bei jeder abfallenden Flanke des Freigabesignals (3) ein Interrupt erzeugt, wobei der Controller (8) so konfiguriert ist, dass er die Zeitdauer zwischen jeweils zwei Interrupts zählt, um ein mit der Frequenz des Rechtecksignals korrespondierendes Maß zu gewinnen.

11. Baugruppe nach einem der Ansprüche 1 - 10, **dadurch gekennzeichnet, dass** die Logikschaltung (13) ein UND-Gatter ist, dessen Ausgang mit dem Steueranschluss des Leistungsschalters (7) verbunden ist, wobei das erste und das zweite Steuersignal (9, 12) an jeweils einem Eingang (11) des UND-Gatters anliegen.

12. Baugruppe nach einem der Ansprüche 1 - 11, **dadurch gekennzeichnet, dass** das zweite Steuersignal (12) zusätzlich mit einem weiteren Eingabeport (19, 29) des Controllers (8) gekoppelt ist, wobei der Controller (8) so konfiguriert ist, dass er das Anliegen des zweiten Steuersignals (12) überwacht und eine Fehlermeldung erzeugt, wenn das Anliegen oder Nicht-Anliegen des zweiten Steuersignals (12) nicht mit den aus der Analyse des Freigabesignals (3) des Steuergeräts (4) abgeleiteten Informationen konsistent ist.

13. Baugruppe nach Anspruch 12, **dadurch gekennzeichnet, dass das** zweite Steuersignal (12) rückwirkungsfrei mit dem weiteren Eingabeport (19, 29) des Controllers (8) gekoppelt ist.

14. Baugruppe nach einem der Ansprüche 1 - 13, **dadurch gekennzeichnet, dass** das Freigabesignal (3) des Steuergeräts (4) rückwirkungsfrei mit dem zusätzlichen Eingabeport (19, 29) des Controllers (8) gekoppelt ist.

## Claims

1. A vehicle steering lock assembly (1) for connecting to a bus (2) transmitting signals for instructing locking or unlocking of the steering and a release signal (3) of a control device (4) which, in the event of a stoppage of the vehicle, is a square wave signal with a predetermined frequency and a predetermined duty factor, including:
a circuit breaker (7) connecting a drive motor (5) for a locking bolt to a supply voltage (6),
a controller (8), which is connected to the bus (2) and which, on receipt of a signal for instructing locking, produces a first control signal for closing the circuit breaker (7),
a security circuit (10), whose input (11) is connected to the release signal (3) of the control device (4) and which produces a second control signal (12), and
a logic circuit (13), which combines the first control signal (9) with the second control signal (12) and applies a control signal (14), which opens the circuit breaker (7), to a control connection of the circuit breaker (7) when both the first and the second control signal (12) are present,
**characterised in that**
an additional input port (19, 29) of the controller (8) is connected to the release signal (3) of the control device (4) and the controller (8) is so configured that it analyses the release signal (3) and applies the first control signal (9), on receipt of a signal for instructing locking, only when the release signal (3) is a square wave signal with the predetermined frequency and the predetermined duty factor, and
that the security circuit (10) is a simple alternating signal detection circuit, which applies the second control signal (12) when an alternating signal is present at its input (11).

2. An assembly as claimed in Claim 1, **characterised in that** the circuit breaker (7) constitutes a branch of an H bridge circuit, wherein the closing of the circuit breaker (7) connected to the control signal (14) from the logic circuit (13) is a prerequisite for a movement of the drive motor (5) in the locking direction.

3. An assembly as claimed in Claim 1 or 2, **characterised in that** the security circuit (10) is so constructed that it applies the second control signal (12) when an alternating signal is present at its input (11), the frequency of which does not differ from the predetermined frequency of the square wave signal by more than about two to three orders of magnitude.

4. An assembly as claimed in Claim 3 for connecting to a release signal (3) of the control device (4) which, in the event of stoppage of the vehicle, is a square wave signal with a frequency of 100 Hz and a duty factor of 50%, **characterised in that** the security circuit (10) is so constructed that it applies the second control signal (9) when an alternating signal is present at its input (11), the frequency of which is between about 2 Hz and 100 kHz.

5. An assembly as claimed in one of Claims 1-3, **characterised in that** the security circuit (10) includes a first circuit for detecting each rising flank and/or a second circuit for detecting each descending flank of the applied release signal (3), wherein after detection of the flank for a predetermined period of time the first and the second circuits produce an output signal, wherein the second control signal (12) is formed from the output signal or the sum of the two output signals.

6. An assembly as claimed in Claim 5 for connecting to a release signal (3) of the control device (4) which, in the event of stoppage of the vehicle, is a square wave signal with a frequency of 100 Hz and a duty factor of 50%, **characterised in that** at each rising flank and/or at each descending flank of the applied alternating signal, the security circuit (10) applies the second control signal (12) for a predetermined period of time of between about 20 ms and 300 ms.

7. An assembly as claimed in Claim 5 or 6, **characterised in that** the first and the second circuit of the security circuit (10) each include a combination of capacitor and resistor elements, which determines the period of time.

8. An assembly as claimed in one of Claims 1-7, **characterised in that** the additional input port (19, 29) of the controller (8), which receives the release signal (3) of the control device (4), is connected to the input (11) of an analogue/digital convertor of the controller (8), wherein the output value produced by the analogue/digital convertor is interrogated cyclically at a frequency which is greater than twice the predetermined frequency of the square wave signal.

9. An assembly as claimed in Claim 8, **characterised in that** the controller (8) is so configured that each interrogated output value is compared with at least one threshold value in order to determine whether the square wave signal has a low or a high level at the time of the interrogation.

10. An assembly as claimed in one of Claims 1-9, **characterised in that** the additional input port (19, 29) of the controller (8), which receives the release signal (3) of the control device (4), is connected to a flank-triggered Interrupt input of the controller (8), which produces an Interrupt at each rising and/or at each descending flank of the release signal (3), wherein the controller (8) is so configured that it counts the period of time between each two Interrupts in order to produce a parameter corresponding to the frequency of the square wave signal.

11. An assembly as claimed in one of Claims 1-10, **characterised in that** the logic circuit (13) is an AND Gate, the output of which is connected to the control connection of the circuit breaker (7), wherein the first and the second control signal (9, 12) are present at a respective input (11) of the AND Gate.

12. An assembly as claimed in one of Claims 1-11, **characterised in that** the second control signal (12) is additionally connected to a second input port (19, 29) of the controller (8), wherein the controller (8) is so configured that it monitors the presence of the second control signal (12) and produces an error signal when the presence or absence of the second control signal is not consistent with the information derived from the analysis of the release signal (3) of the control device (4).

13. An assembly as claimed in Claim 12, **characterised in that** the second control signal (12) is connected in a non-interactive manner to the further input port (19, 29) of the controller (8).

14. An assembly as claimed in one of Claims 1 - 13, **characterised in that** the release signal (3) of the control device (4) is connected in a non-interactive manner to the additional inlet port (19, 29) of the controller (8).

## Revendications

1. Ensemble de verrouillage de direction de véhicule (1) pour le couplage avec un bus (2) transmettant des instructions pour ordonner un verrouillage ou un déverrouillage de la direction et un signal de libération (3) d'un appareil de commande (4) qui, dans le cas d'un arrêt du véhicule, est un signal rectangulaire d'une fréquence prédéfinie et d'un taux d'impulsions prédéfini, comprenant :
un commutateur de puissance (7) couplant un moteur d'entraînement (5) pour un boulon de blocage à une tension d'alimentation (6),
un contrôleur (8) couplé au bus (2) qui délivre, lors de la réception d'une instruction pour ordonner un verrouillage, un premier signal de commande (9) afin d'enclencher le commutateur de puissance (7),
un circuit de sécurité (10), dont l'entrée (11) est couplée au signal de libération (3) de l'appareil de commande (4) et qui délivre un second signal de commande (12), et
un circuit logique (13), qui combine le premier signal de commande (9) au second signal de commande (12) et qui n'applique un signal de commande (14) enclenchant le commutateur de puissance (7) sur une connexion de commande du commutateur de puissance (7) que lorsque les premier et second signaux de commande (12) sont tous deux appliqués,
**caractérisé en ce que**
un port d'entrée supplémentaire (19, 29) du contrôleur (8) est couplé au signal de libération (3) de l'appareil de commande (4) et le contrôleur (8) est configuré de sorte qu'il analyse le signal de libération (3) et n'applique le premier signal de commande (9) lors de la réception d'une instruction pour ordonner un verrouillage que lorsque le signal de libération (3) est un signal rectangulaire d'un fréquence prédéfinie et d'un taux d'impulsions prédéfini, et
**en ce que** le circuit de sécurité (10) est un simple circuit de détection de signal alternatif, qui applique le second signal de commande (12) lorsqu'un signal alternatif est appliqué à son entrée (11).

2. Ensemble selon la revendication 1, **caractérisé en ce que** le commutateur de puissance (7) forme une branche d'un circuit à pont en H, dans lequel l'enclenchement du commutateur de puissance (7) commuté par le signal de commande (14) du circuit logique (13) est une condition pour un déplacement du moteur d'entraînement (5) dans la direction de verrouillage.

3. Ensemble selon la revendication 1 ou la revendication 2, **caractérisé en ce que** le circuit de sécurité (10) est tel que le second signal de commande (12) soit appliqué lorsqu'un signal alternatif est appliqué à son entrée (11), signal dont la fréquence ne diverge pas de plus d'environ deux à trois puissances de dix de la fréquence prédéfinie du signal rectangulaire.

4. Ensemble selon la revendication 3 pour le couplage avec un signal de libération (3) de l'appareil de commande (4), qui, dans le cas de l'arrêt du véhicule, est un signal rectangulaire d'une fréquence de 100 Hz et d'un taux d'impulsions de 50 %, **caractérisé en ce que** le circuit de sécurité (10) est tel que le second signal de commande (9) soit appliqué lorsqu'un signal alternatif est appliqué à son entrée (11), signal dont la fréquence se situe entre environ 2 Hz et 100 kHz.

5. Ensemble selon l'une quelconque des revendications 1 à 3, **caractérisé en ce que** le circuit de sécurité (10) présente un premier circuit pour enregistrer chaque flanc montant et/ou un second circuit pour enregistrer chaque flanc descendant du signal de libération (3) appliqué, dans lequel les premier et second circuits génèrent un signal de sortie après enregistrement des flancs sur un intervalle de temps prédéfini, dans lequel le second signal de commande (12) est formé par le signal de sortie ou la somme des deux signaux de sortie.

6. Ensemble selon la revendication 5 pour le couplage avec un signal de libération (3) de l'appareil de commande (4) qui, dans le cas de l'arrêt du véhicule, est un signal rectangulaire d'une fréquence de 100 Hz et d'un taux d'impulsions de 50 %, **caractérisé en ce que** le circuit de sécurité (10) applique, pour tout flancmontant et/ou pour tout flanc descendant du signal alternatif appliqué, le second signal de commande (12) sur un intervalle de temps prédéfini entre environ 20 ms et 300 ms.

7. Ensemble selon la revendication 5 ou la revendication 6, **caractérisé en ce que** les premier et second circuits du circuit de sécurité (10) présentent respectivement une combinaison, déterminant l'intervalle de temps, constituée de composants de condensateur et de résistance.

8. Ensemble selon l'une quelconque des revendications 1 à 7, **caractérisé en ce que** le port d'entrée supplémentaire (19, 29) du contrôleur (8), qui reçoit le signal de libération (3) de l'appareil de commande (4), est couplé à l'entrée (11) d'un convertisseur analogique/numérique du contrôleur (8), dans lequel la valeur de sortie délivrée par le convertisseur analogique/numérique est interrogée de manière cyclique à une fréquence qui est supérieure au double de la fréquence prédéfinie du signal rectangulaire.

9. Ensemble selon la revendication 8, **caractérisé en ce que** le contrôleur (8) est configuré de sorte que chaque valeur de sortie interrogée soit comparée à au moins une valeur de seuil pour enregistrer si le signal rectangulaire avait un niveau bas ou un niveau élevé au moment de l'interrogation.

10. Ensemble selon l'une quelconque des revendications 1 à 9, **caractérisé en ce que** le port d'entrée supplémentaire (19, 29) du contrôleur (8), qui reçoit le signal de libération (3) de l'appareil de commande (4), est connecté à une entrée d'interruption déclenchée par un flanc du contrôleur (8), qui génère, pour tout flanc montant et /ou descendant du signal de libération (3), une interruption, dans lequel le contrôleur (8) est configuré de sorte qu'il compte l'intervalle de temps entre deux interruptions respectives pour obtenir une mesure correspondant à la fréquence du signal rectangulaire.

11. Ensemble selon l'une quelconque des revendications 1 à 10, **caractérisé en ce que** le circuit logique (13) est une porte ET, dont la sortie est raccordée à la connexion de commande du commutateur de puissance (7), dans lequel les premier et second signaux de commande (9, 12) sont appliqués à une entrée respective (11) de la porte ET.

12. Ensemble selon l'une quelconque des revendications 1 à 11, **caractérisé en ce que** le second signal de commande (12) est couplé en outre à un autre port d'entrée (19, 29) du contrôleur (8), dans lequel le contrôleur (8) est configuré de sorte qu'il contrôle l'application du second signal de commande (12) et qu'il génère un message d'erreur lorsque l'application ou la non-application du second signal de commande (12) n'est pas compatible avec les informations dérivées de l'analyse du signal de libération (3) de l'appareil de commande (4).

13. Ensemble selon la revendication 12, **caractérisé en ce que** le second signal de commande (12) est couplé sans rétroaction à l'autre port d'entrée (19, 29) du contrôleur (8).

14. Ensemble selon l'une quelconque des revendications 1 à 13, **caractérisé en ce que** le signal de libération (3) de l'appareil de commande (4) est couplé sans rétroaction au port d'entrée supplémentaire (19, 29) du contrôleur (8).
